# EUROPEAN PATENT SPECIFICATION

(11) **EP 1 568 438 B1**
(45) Date of publication and mention of the grant of the patent: **31.10.2007**
(21) Application number: 05101186.4
(22) Date of filing: 17.02.2005
(51) Int. Cl.: B23Q 3/157, C21D 1/09

(54) **Machine tool**
Werkzeugmaschine
Machine outil

(30) Priority: 24.02.2004 JP 2004048283
(43) Date of publication of application: 31.08.2005
(73) Proprietor: YAMAZAKI MAZAK KABUSHIKI KAISHA, Niwa-Gun, Aichi-Ken (JP)
(72) Inventor: Yamazaki, Tsunehiko, Aichi-ken (JP); Miyagawa, Naoomi, Gifu-ken (JP)
(74) Representative: Hengelhaupt, Jürgen

(56) References cited:
- DE-A1- 10 126 165
- DE-A1- 19 811 032
- PATENT ABSTRACTS OF JAPAN vol. 010, no. 372 (M-544), 11 December 1986 (1986-12-11) -& JP 61 164738 A (TOYODA MACH WORKS LTD), 25 July 1986 (1986-07-25)

## Description

### BACKGROUND OF THE INVENTION

The invention relates to a machine tool having both tool rest for movably supporting at least a tool and a laser beam generating means.

A conventional machine tool can change a tool, and with such a machine tool, various kinds of machining is executed (see a Japanese patent application, Publication No.H11 (1999) - 77467).

JP 61 164 738 A discloses a machine tool capable of laser beam machining. The purpose is to perform complicated laser beam machining easily and quickly by accommodating a laser beam machining head in a tool magazine of a machining center and providing a laser beam projecting means to irradiate the laser beam emitted by a laser beam generator.

DE 101 26 165 A1 discloses a method for hardening the surface of a workpiece using lasers. However, only one laser beam is used for the hardening making the process inefficient.

Both mechanical machining and hardening with laser beam on a surface of a workpiece are desired to be performed with one machine tool, but a machine tool having a proper structure has not been proposed.

Then, a machine tool for also executing hardening with laser beam in addition to cutting machining is still desired.

### SUMMARY OF THE INVENTION

The invention relates to a machine tool according to claim 1.

According to the invention, hardening with laser beam can be performed with the machine tool in addition to cutting machining. Then, it is not necessary to locate a hardening unit in addition to a machine tool, thereby preventing increase of space for location. Besides, it is not necessary to move a workpiece from the machine tool to the laser beam hardening unit, thereby shortening time for operation and simplifying the operation itself.

Another aspect of the invention is the machine tool, wherein said tool rest is rotationally moved around a rotationally moving axis, and said laser beam generating means is located at a surface of said tool rest almost perpendicular to said rotationally moving axis.

According to this aspect of the invention, it is sufficient to locate the laser beam generating means at an existent empty space (that is, the surface of the tool rest almost perpendicular to the rotationally moving axis), and a new space for location is not necessary to be secured, thereby preventing the big sized machine tool.

Another aspect of the invention according to claim 1 relates to a machine tool, wherein said laser beam generating means has a semiconducting laser beam source for emitting laser beam, and a beam guiding portion for transmitting said laser beam emitted.

According to this aspect of the invention, the laser beam generating means can be made smaller since the semiconducting laser beam source is used, thereby actualizing installation of the laser beam generating means on the tool rest.

Another aspect of the invention according to claim 1 relates to a machine tool, wherein said semiconducting laser beam source has a plurality of openings for emission, for emitting said laser beam, and said beam guide portion is comprised of a first beam guide portion which is a bundle of a plurality of optical fibers, said optical fiber being located so as to receive said laser beam from each said opening for emission, and a second beam guide portion located so as to pass through said laser beam from said first beam guide portion.

According to this aspect of the invention, a plurality of optical fibers collect laser beam emitted from each opening for emission, thereby raising output of the laser beam.

Another aspect of the invention according to claim 1 relates to a machine tool, wherein said second beam guide portion is a hollow path formed at an inside of a predetermined member, and an inner face of said hollow path is processed so as to reflect, and said laser beam passes through said hollow path, being reflected by said inner face.

According to this aspect of the invention, the second beam guide portion can be formed by mechanical machining, thereby improving an accuracy of the position of the optical path of laser beam. Besides, an efficiency of cooling can be also improved when using a material having a superior heat conductivity for the predetermined member.

Another aspect of the invention according to claim 1 relates to a machine tool, wherein at least one of said first and second beam guide portions has a tapered beam path portion having a gradually reduced cross sectional area, and power density of said laser beam from said semiconducting laser beam source is enhanced during passing said laser beam through said tapered beam path portion.

According to this aspect of the invention, the power density can be raised, thereby smoothly performing hardening with laser beam.

Another aspect of the invention is the machine tool, wherein said tool rest has at least one tool installation portion for supporting a tool for cutting machining and supporting a tool for emitting laser beam in place of said tool for cutting machining, and said beam guide portion is located, extending from a portion near said semiconducting laser beam source to a portion near said tool installation portion, having a tool side end portion near said tool installation portion, and said laser beam supplied from said semiconducting laser beam source radiates said workpiece when said tool for emitting laser beam connects with said tool side end portion of said beam guide portion, while said tool being supported by said tool installation portion.

According to this aspect of the invention, the tool for emitting laser beam can be detached from the tool rest if not used, thereby preventing attachment of foreign objects to the tool for emitting laser beam. Besides, a single tool installation portion can support both the tools for cutting machining and for emitting laser beam, thereby making the unit compact.

Another aspect of the invention is the machine tool, wherein said workpiece holding means can rotate held said workpiece, and an automatic tool changer is located at a position being capable of facing said tool installation portion so as to attach and detach said tool for cutting machining and said tool for emitting laser beam to and from said tool installation portion, and cutting machining and a hardening can be executed on rotating said workpiece by changing said tool with said automatic tool changer.

According to this aspect of the invention, the tool can be easily attached and detached.

Another aspect of the invention is the machine tool, wherein a shutter means for opening and closing said tool side end portion is provided, and said shutter means opens said tool side end portion when contacting said tool for emitting laser beam with said tool side end portion and closes said tool side end portion when detaching said tool for emitting laser beam from said tool side end portion in order to restrict attachment of foreign objects to said tool side end portion.

According to this aspect of the invention, attachment of foreign obj ects to the end portion (the end portion on the tool side) of the beam guide portion can be restricted, thereby avoiding power down of laser beam due to the presence of foreign objects in the beam guide portion.

Another aspect of the invention is the machine tool, wherein said shutter means is a member movable to a closed position for closing said tool side end portion and an opened position for opening said tool side end portion.

According to this aspect of the invention, the structure of the shutter means can be made simple.

### BRIEF DESCRIPTION OF THE DRAWINGS

Fig.1 is a sectional view showing a structure of a machine tool according to the invention;
Fig.2 is a perspective view showing an appearance of the machine tool according to the invention;
Fig.3 is a sectional view showing the machine tool when installing a tool for cutting machining 201;
Fig.4 is a sectional view showing structures of a laser beam generating means and a tool for radiating laser beam;
Fig.5 is a perspective view showing an appearance of a structure of the laser beam generating means;
Fig.6 is a perspective view showing appearances of structures of the laser beam generating means and the tool for radiating laser beam;
Fig.7 is a partial sectional view showing a structure of an installation portion of the tool for radiating laser beam;
Fig.8 is an exploded perspective view showing a structure of a second beam guide portion 31;
Fig.9 is a view showing a structure of a tapered beam path portion;
Fig.10 is a view showing a closing mechanism in an end of an opening of the second beam guide portion 31;
Fig.11(a) is a partial sectional view showing a structure of the tool for radiating laser beam,
Fig.11(b) is a side view showing a structure of a torch portion 103, and Fig.11(c) is a side view showing a structure of a shutter means 105;
Fig.12(a) is a partial sectional view showing another structure of the tool for radiating laser beam, and Fig.12(b) is a side view showing a structure of a torch portion 113;
Fig.13 is a view showing a structure of the shutter means for properly closing an end portion of a beam guide path (a path of laser beam) wherein (a) is a sectional view showing a state of a closed position, (b) is a sectional view showing a state of an opened position, and (c) is a side view showing a state of the closed position; and
Fig.14 is a perspective view showing the machine tool according to the invention.

### DESCRIPTION OF THE PREFERRED EMBODIMENTS

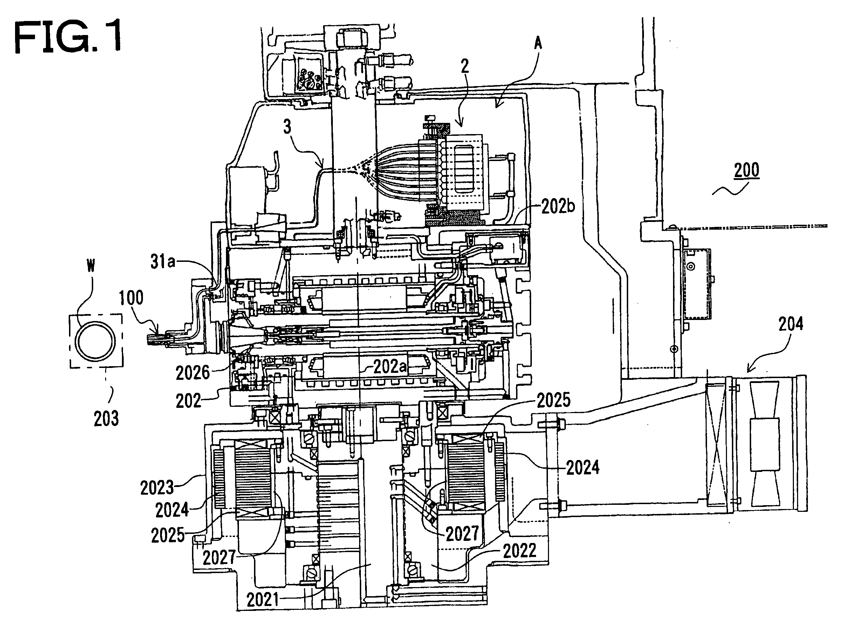

An embodiment of the invention is now explained, referring to the appended drawings Figs.1 through 13.

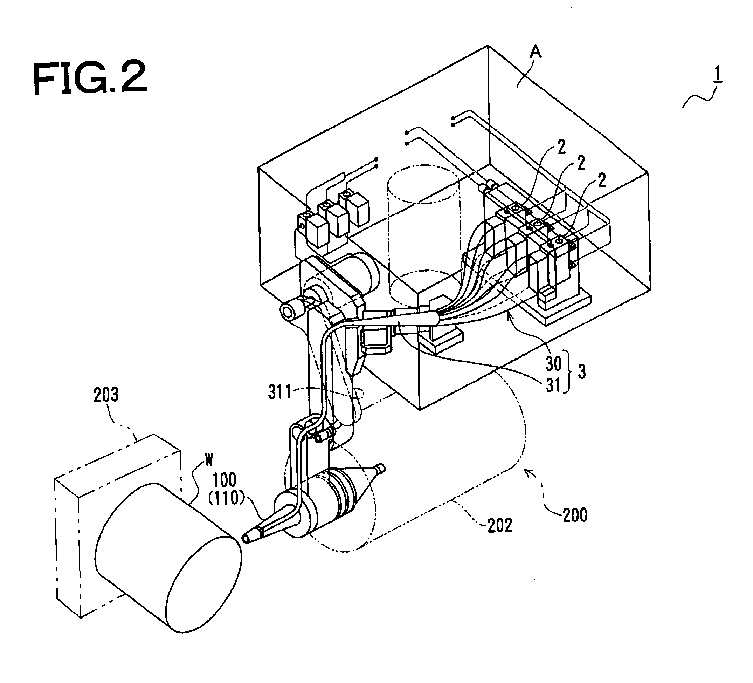

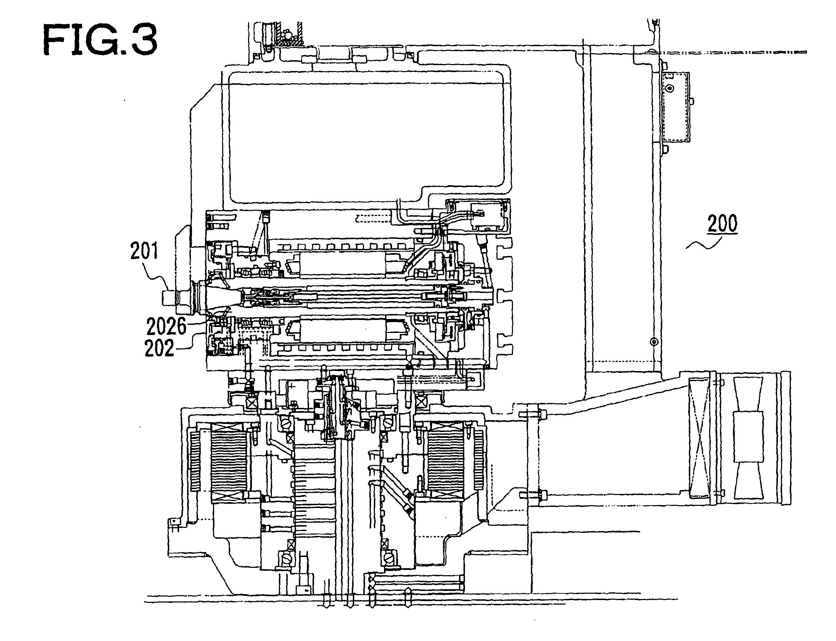

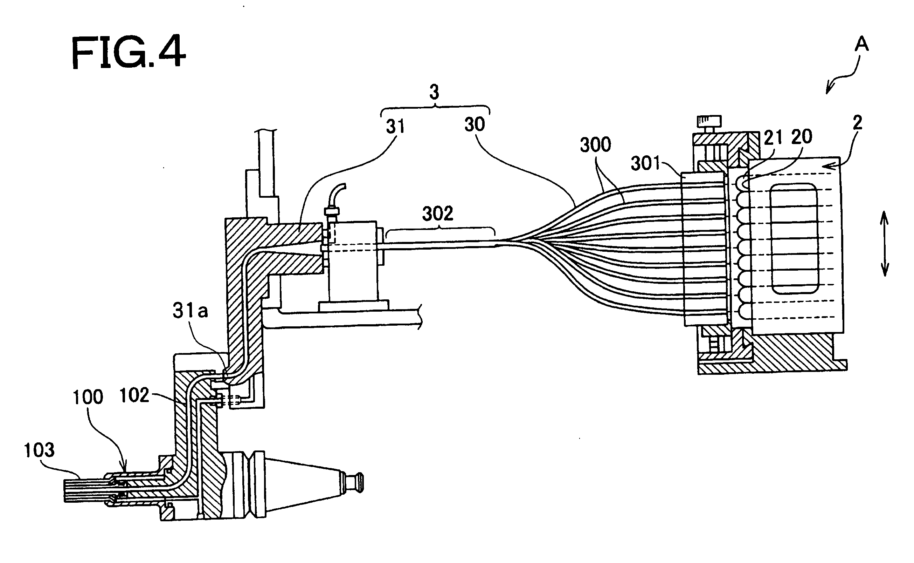

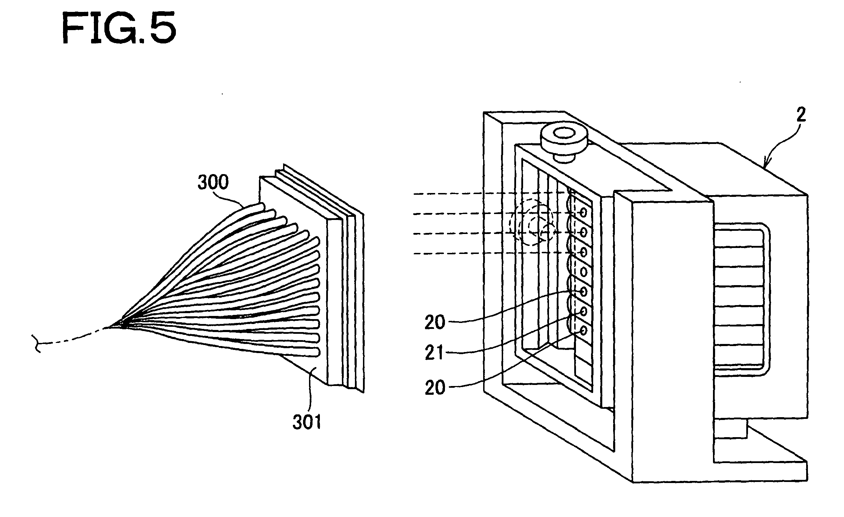

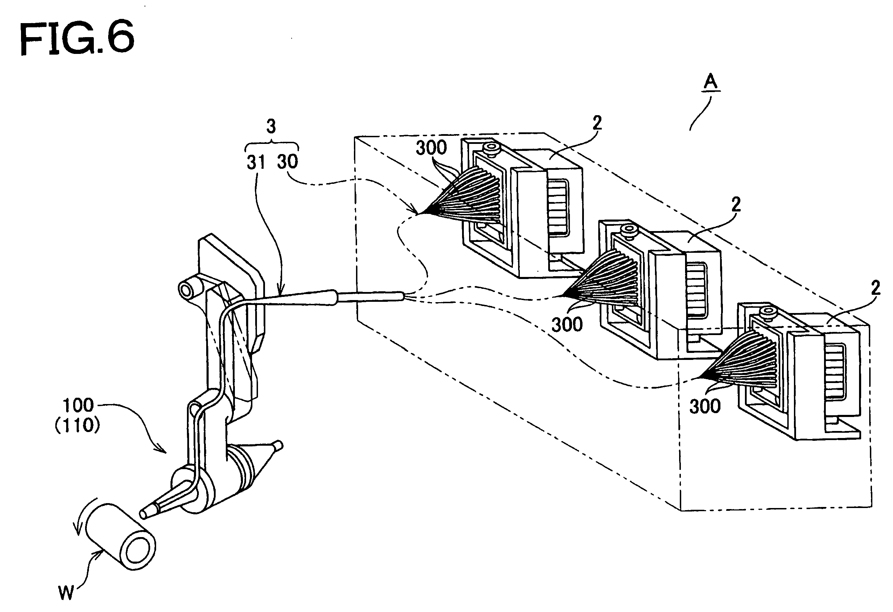

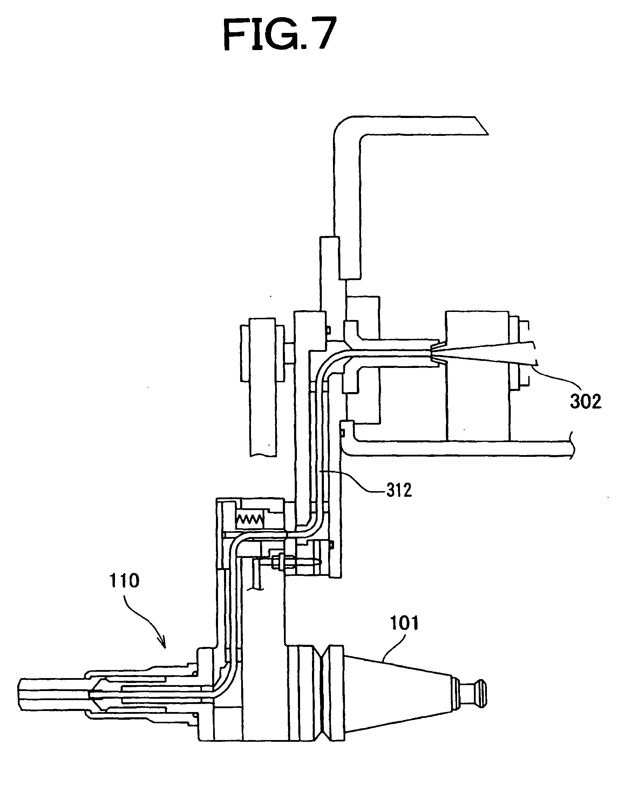

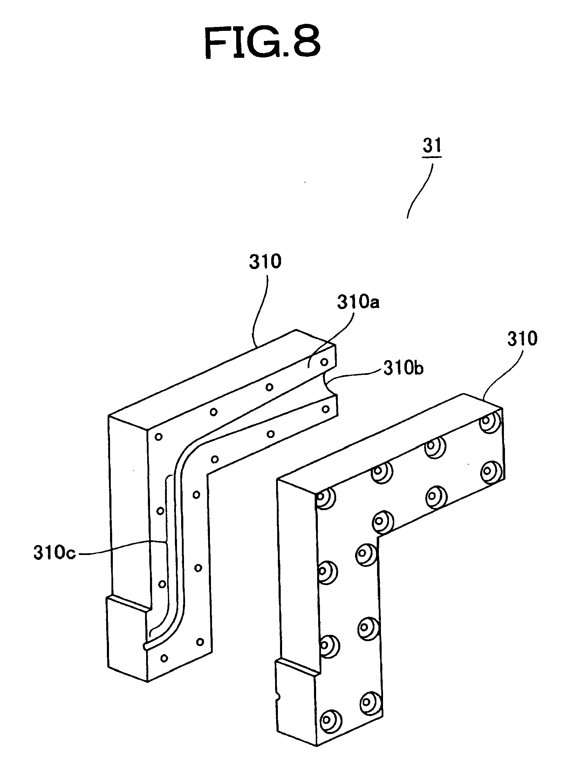

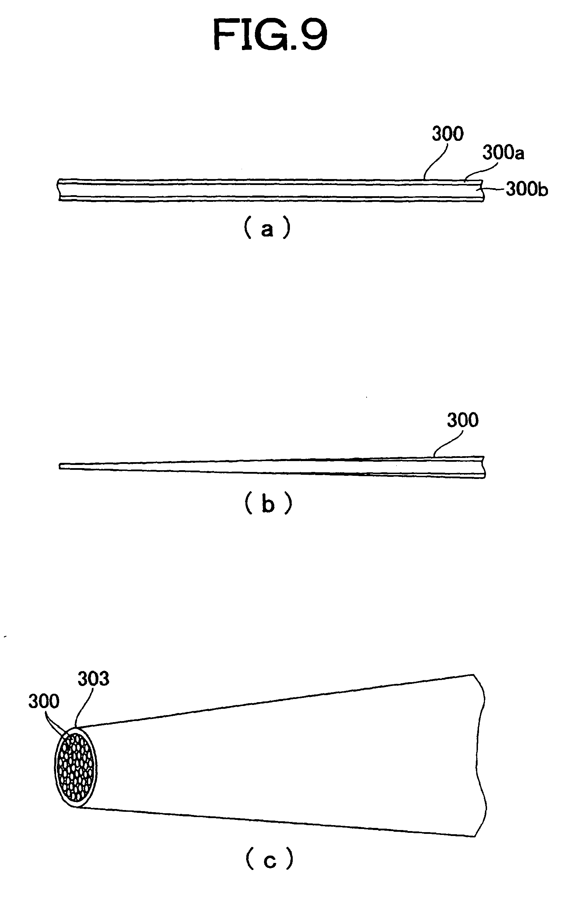

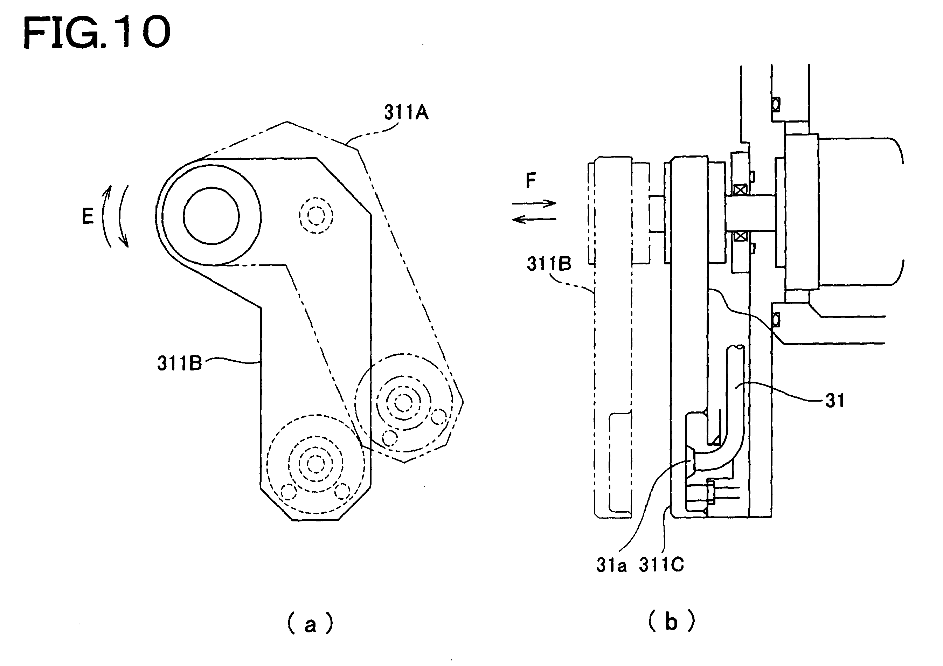

Fig.1 is a sectional view showing a structure of a machine tool according to the invention, Fig.2 is a perspective view showing an appearance of the machine tool according to the invention, Fig.3 is a sectional view showing the machine tool when installing a tool for cutting machining 201, Fig.4 is a sectional view showing structures of a laser beam generating means and a tool for radiating laser beam, Fig.5 is a perspective view showing an appearance of a structure of the laser beam generating means, Fig.6 is a perspective view showing appearances of structures of the laser beam generating means and the tool for radiating laser beam, Fig.7 is a partial sectional view showing a structure of an installation portion of the tool for radiating laser beam, Fig.8 is an exploded perspective view showing a structure of a second beam guide portion 31, Fig.9 is a view showing a structure of a tapered beam path portion, and Fig.10 is a view showing a closing mechanism in an end of an opening (the end portion on a side of a tool) of the second beam guide portion 31.

A machine tool 200 according to the invention as shown in Figs. 1 and 2 has a workpiece holding means 203 for holding a workpiece W and a tool rest 202 for supporting a tool 201 as shown in Fig.3.

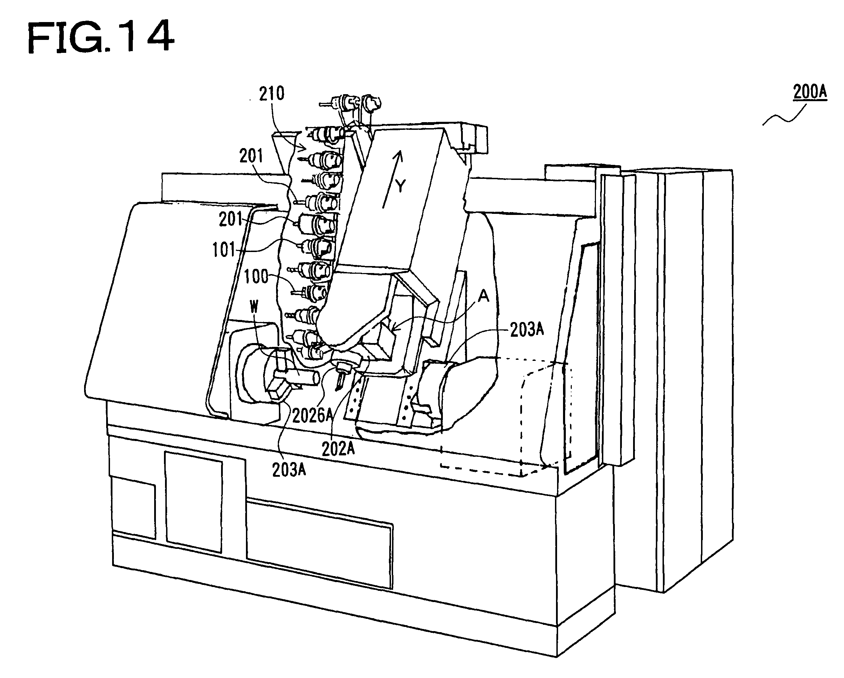

Preferably, the workpiece holding means 203 can hold the stationary workpiece W, and move and rotate the workpiece W. The workpiece holding means for rotating the workpiece W are a chuck 203A as shown in Fig.14, a tail stock (not shown) and the like.

The tool rest 202 supports at least one tool, movably between a waiting position and a machining position (a position where the workpiece W is machined). Preferably, the tool rest 202 is rotatably moved around a rotationally moving axis 202a. Preferably, the tool rest 202 has at least one tool installation portion 2026, and the tool is attachably and detachably supported by the tool installation portion 2026. A reference number 2021 of Fig.1 denotes an axial portion, and a reference number 2022 denotes a movable portion rotatably supported by the axial portion 2021, for rotating around the rotationally moving axis 202a together with the tool installation portion 2026. A case 2023 stores the axial portion 2021 and the movable portion 2022. A core 2024 is supported on a side of the case 2023, and a coil 2025 is wound on the core 2024. And, a plurality of magnets 2027 are located at a position facing the core 2024 at an outer peripheral face of the movable portion 2022 in the peripheral direction of the movable portion 2022. When electrifying the coil 2025 with such a structure, a repulsive force or an attracting force generates between the core 2024 and the magnets 2027, through which the movable portion 2022 and the tool installation portion 2026 can be rotated to predetermined rotational positions. A cooling unit 204 cools an inside of the tool rest 202 by supplying air therein. In the tool rest 202, big torque acts on the movable portion 2022, so that large volume of heat generates on the driving portion (such as the core 2024 and the coil 2025). The cooling unit 204 is effective for cooling such heat. With the cooling unit 204, thermal expansion of the core 2024 and the coil 2025 can be reduced, thereby properly keeping a gap between the core 2024 and the magnet 2027.

A laser beam generating means A for generating laser beam of Fig.1 is located at the tool rest 202, and hardening is executed on the workpiece W held by the workpiece holding means 203 with laser beam generated from the laser beam generating means A. According to the invention, hardening can be executed with the machine tool in addition to cutting machining, thereby preventing increase of a space for locating a laser beam hardening unit. Besides, it is not necessary to move a workpiece from a machine tool to a laser beam hardening unit, thereby shortening operation time and also simplifying the operations. Preferably, such hardening is executed, while rotating the workpinece W by the workpiece holding means 203.

Preferably, the laser beam generating means A is located at a surface 202b of the tool rest 202, almost perpendicular to the rotationally moving axis 202a if the tool rest 202 is rotationally moved around the rotationally moving axis 202a. In such a case, it is sufficient to locate the laser beam generating means A in an existent empty space (that is, the surface of the tool rest almost perpendicular to the rotationally moving axis). Then, it is not necessary to secure a new location space, thereby avoiding a large sized machine tool.

Preferably, the laser beam generating means A is comprised of a semiconducting laser beam source 2 for emitting laser beam and a beam guide portion 3 for transmitting emitted laser beam, as detailedly shown in Fig.4. When using the semiconducting laser beam source 2, the laser beam generating means A can be made smaller, and can be located at the tool rest 202.

Preferably, the semiconducting laser beam source 2 has a plurality of emitters 20 which are openings for emitting laser beam, as detailedly shown in Fig.5. The source 2 may be "an array type" wherein the emitters 20 are arranged in a row or "a stack type" wherein a plurality of the arrays are stacked. Only one or more (as shown in Fig.6) semiconducting laser beam sources 2 may be used. In Fig.6, three sources 2 are shown, but the number may be two, four or more. Such kind of the semiconducting laser beam source 2 is a semiconducting laser beam stacked array "Light Stack" made by Coherent Inc. of the U.S.A., for instance. The array may be comprised of nineteen (19) emitters (40W) and twenty five (25) layers of arrays may be stacked so that a total number of the emitters is 19×25=475 (40W×25 layers = 1kW). When using three of such a laser beam stack as shown in Fig.6, the total number of the emitters is 475×3=1425 (1kW×3=3kW).

Preferably, the beam guide portion 3 has a first beam guide portion 30 comprised of a bundle of a plurality of optical fibers 300, and a second beam guide portion 31 located so as to pass laser beam from the first beam guide portion 30, as shown in Fig.4. Preferably, the optical fiber 300 is located such that an end thereof faces the emitter 20 in order to receive laser beam from each emitter 20 (see Fig.5), and laser beam emitted from each emitter 20 is transmitted. In such a case, output of laser beam can be raised since a plurality of optical fibers 300 collects laser beam emitted from each emitter 20. Preferably, the end portion of each optical fiber 300 in a state of being embedded in a resin 301 is located, facing each emitter 20. Preferably, a microlens 21 (fast axis converging lens or slow axis converging lens) located between the end portion of the optical fiber 300 and the emitter 20 collects laser beam from the emitter 20 on an end face of the optical fiber 300. Preferably, a sheet shaped microlens is attached to the semiconducting laser beam source 2 with an adhesive or by soldering. The other ends of the optical fibers 300 may be bundled. Preferably, the number of the optical fibers 300 is the same as one of the emitters 20.

Preferably, the second beam guide portion 31 may be a beam guiding body (see a reference number 312 of Fig.7) having an outer peripheral face processed so as to reflect, and laser beam passes through the beam guiding body, being reflected by the outer peripheral face. Alternatively, the second beam guide portion 31 may be a hollow path (see reference numbers 310b, 310c) formed inside a predetermined member 310 ("the path forming member" hereinafter) as shown in Fig.8, and the inner face of the path is processed so as to reflect, and laser beam passes through the hollow path, being reflected by the inner face. Preferably, the path forming member 310 is made of metal, such as aluminium. Amethodof forming the hollow path is that the path forming member is formed so as to divide into a plurality of the members 310, and a groove 310b is formed at a mating face 310a, as shown in Fig.8. Preferably, mirror finish, lapping or metal coating is carried out on the portion of the groove 310b. If the second beam guide portion 31 is comprised of the beam guiding body, the position of the optical path of laser beam can be easily adjusted only by changing the position of the beam guiding body. If the second beam guide portion 31 is comprised of the hollow path, the second beam guide portion can be formed by mechanical machining, and an accuracy of the position of the optical path of laser beam can be improved. If a material having superior heat conductivity is used for the predetermined material, an efficiency of cooling can be also improved.

Preferably, at least one of the first and second beam guide portions 30, 31 has a tapered beam path portion having a cross-section (area of a transverse section) gradually reducing along a direction of advancing laser beam, and the laser beam from the semiconducting laser beam source 2 is improved in its power density in a process of passing through the tapered beam path portion. With this structure, hardening with laser beam can be smoothly executed.

The tapered beam path portion may be a bundle structure comprised of a plurality of optical fibers, having a cross-section gradually reducing. Preferably, such a structure is applied to the optical fibers 30 comprising the first beam guide portion 30 (see a reference number 302 of Fig.7). If the number of the emitters 20 is 1425, the number of the optical fibers 300 is necessary to be also 1425. If a diameter of one optical fiber 300 is 250 µm, the bundle diameter is 250 µm×1425=φ 11mm. If the diameter of one optical fiber 300 is 500 µ m, the bundle diameter is 500 µm×1425=φ 22mm. When the bundle diameter remains φ 11mm or φ 22mm, the power density of laser beam is not raised and then, a hardening with laser can not be executed. Then, preferably, the cross section of the optical path of a bundle portion 302 is gradually reduced so that the bundle diameter becomes φ 4 through φ 5, and 100W/mm² of power density (2kW of output) is obtained. Fig.9(a) shows one fiber 300 before processing to be tapered, a reference number 300a is a clad, and a reference number 300b is a core. Fig.9(b) shows the fiber 300 after machining so as to be tapered, and Fig.9(c) shows a bundle structure comprised of the fibers after tapering machining. A reference number 303 denotes a clad newly coated. Such bundle structure may be used for the second beam guide portion 31, not for the first beam guide portion 30.

Besides, a tapered fiber (see Japanese patent applications, Publication numbers are 2003-100123. 2003-75658 and 2002-289016) may be used for the tapered beam path portion.

As shown in Fig.8, a tapered hollow path may be formed inside the predetermined member 310.

Preferably, the tool installation portion 2026 supports the tool for cutting machining (see the reference number 201 of Fig. 3), or supports a tool for emitting laser beam (reference numbers 100, 110 of Figs.1, 2, 4, 6 or 7) in place of the tool for cutting machining. Then, the tools for emitting laser beam 100, 110 can be detached from the tool rest 202 when not using, thereby preventing foreign objects from adhering to the tools for emitting laser beam 100, 110. Besides, the unit becomes compact since a single tool installation portion 2026 can support both the tool for cutting machining 201 and the tools for emitting laser beam 100, 110. Preferably, the beam guide portion 3 is located, extending from a portion near the semiconducting laser beam source 2 and to a portion near the tool installation portion 2026, and has a tool side end portion 31a near the tool installation portion 2026, and the tool for emitting laser beam 100 or 110 connects with the tool side end portion 31a, being supported by the tool installation portion 2026, so that laser beam supplied from the semiconducting laser beam source 2 is radiated on the workpiece W.

When detaching the tools for emitting laser beam 100, 110 in a structure wherein the tools can be detached, it is necessary to close the tool side end portion 31a of the beam guide portion 3 in order not to adhere or enter foreign objects, such as oil mist in the air. Preferably, a shutter means for opening and closing the tool side end portion 31a is provided so as to open the end portion 31a when contacting the tools for emitting leaser beam 100, 110 with the tool side end portion 31a, and so as to close the tool side end portion 31a when detaching the tools for emitting laser beam 100, 110 from the end portion 31a in order to save attachment of foreign objects to the end portion. Concretely speaking, a shutter means 311 may be provided so as to be moved to a closed position 311c for closing the tool side end portion 31a and an opened position 311A for opening the end portion 31a, as shown in Fig.10. That is, the shutter means 311 may be rotationally movable in a direction of a reference number E, and may enter or come out in an axial direction of the rotational axis as shown with a reference number F. Then, the end portion 31a of the beam guide portion 3 is opened so as to connect with the tools for emitting laser beam 100, 110 in a state of 311A, and the end portion 31a is closed in a state of 311C after moving from 311B so as not to enter foreign objects into the end portion 31a or adhere foreign objects to the end portion 31a. In the end, it is possible to avoid power down of laser beam due to presence of the foreign objects. Besides, the structure is simple if the shutter means is one shown in Fig.10.

The machine tool may be one shown in Fig.14. That is, the workpiece holding means 203A rotates the held workpiece W, and a tool rest 202A has a tool installation portion 2026A. And, an automatic tool changer (not shown) may be located at a position facing the tool installation portion 2026A (such as a position corresponding to a mechanical origin of the tool rest 202A which is provided on a side of the direction Y of Fig.14, and the automatic tool changer attaches and detaches the tool for cutting machining and the tools for emitting laser beam to and from the tool installation portion 2026A. Then, cutting machining can be performed on the rotating workpiece W when installing the tool for cutting machining on the tool installation portion 2026A, and a hardening can be performed on the rotating workpiece W when installing the tool for emitting laser beam on the tool installation portion 2026A. Preferably, a stock portion (ATC tool magazine) 210 having a plurality of the tools for cutting machining and for emitting laser beam is provided, and the tool stocked by the stock portion 210 is installed in the tool installation portion 2026Aby the automatic tool changer. Preferably, the stock portion 210 has such a structure that a tool to be newly installed according to machining program is transferred to a position facing the automatic tool changer.

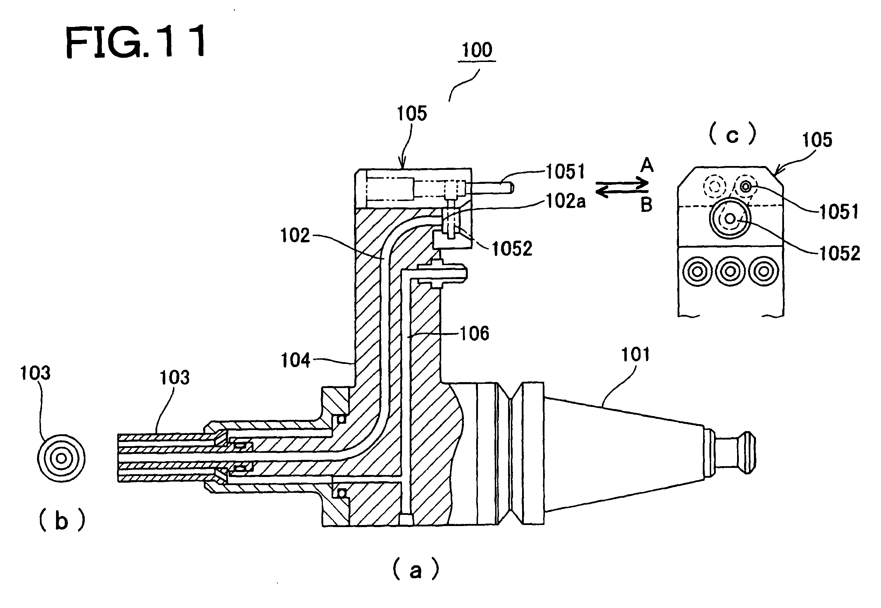

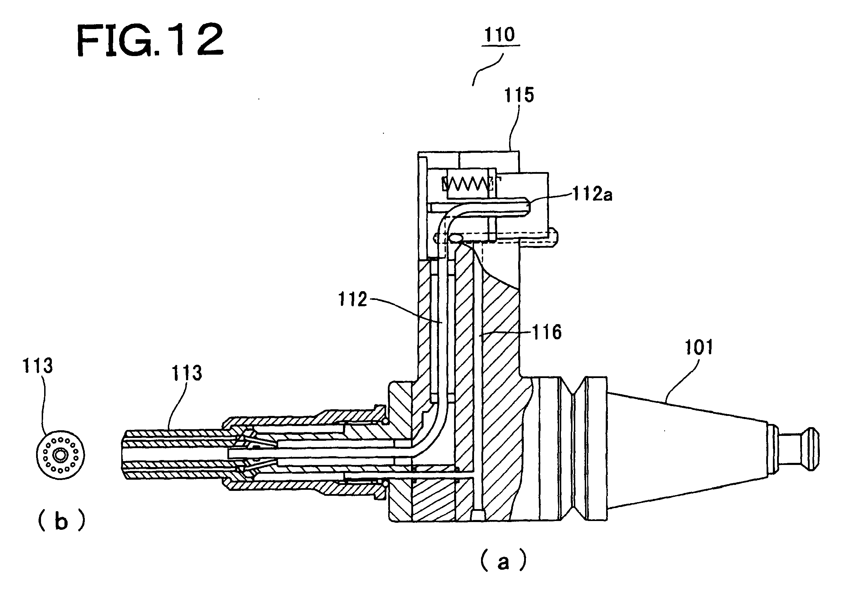

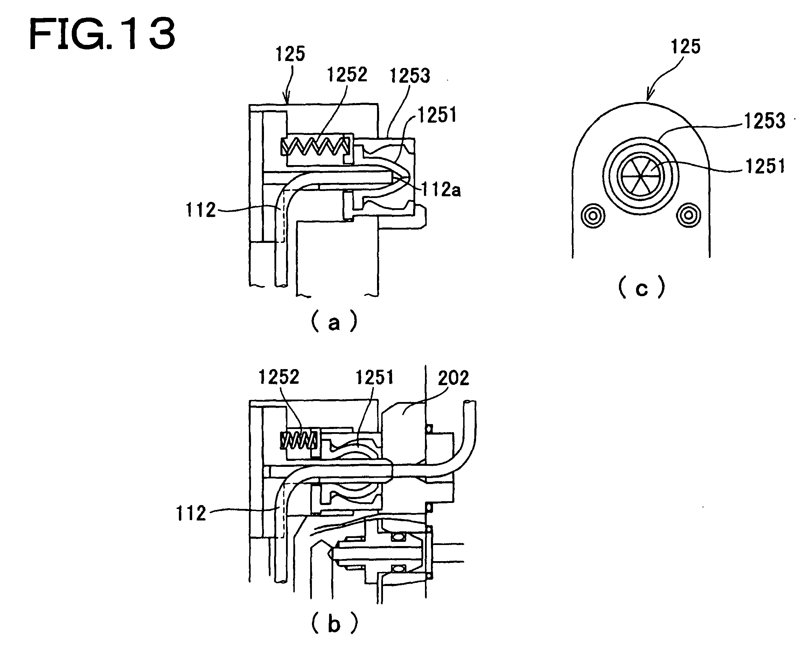

The tool for emitting laser beam is now explained, referring to Figs.11 through 13. Fig.11(a) is a partial sectional view showing a structure of the tool for radiating laser beam, Fig.11(b) is a side view showing a structure of a torch portion 103, and Fig.11(c) is a side view showing a structure of a shutter means 105. Fig.12(a) is a partial sectional view showing another structure of the tool for radiating laser beam, and Fig.12(b) is a side view showing a structure of a torch portion 113. Fig.13 is a view showing a structure of the shutter means for properly closing an end portion of a beam guide path (a path of laser beam) wherein (a) is a sectional view showing a state of a closed position, (b) is a sectional view showing a state of an opened position, and (c) is a side view showing a state of the closed position.

The tool for emitting laser beam 100 has a shape as shown in Fig.11(a), and has an engagement portion 101 for engaging with the tool rest 202 of the machine tool 200, a beam guide path 102 which is a path of laser beam supplied, and a torch portion 103 for emitting laser beam passed through the beam guide path 102 on the workpiece W.

The beam guide path 102 is a hollow path which is formed inside a predetermined member 104, and an inner face of the path is preferably processed so as to reflect. With such a structure, laser beam passes through the hollow path, being reflected by the inner face. The processing of reflecting is lapping, mirror finish, or coating with gold or silver. The member 104 may be made of metal, such as aluminium. A method of forming the hollow path is that the member 104 is divided into a plurality of members, and a groove is formed at a mating face. If the member 104 is divided into a plurality of members, it is necessary that beam does not escape from a gap of the mating face. If the beam guide path is the hollow path 102, the beam guide path can be formed by mechanical machining, and an accuracy of the position can be improved.

The beam guide path may be comprised of a beam guiding body 112 having an outer peripheral face processed so as to reflect, as shown in Fig.12(a), not be comprised of the hollow path. In this case, laser beam passes through the beam guiding body 112, being reflected by the outer peripheral face. The processing to reflect is coating with gold or silver, for instance. The beam guiding body is a glass, for instance. When forming the beam guide path with the beam guiding body 112, the position of the optical path of laser beam can be easily adjusted only by change of a position of the beam guiding body 112.

Preferably, a shutter means (reference number 105 in Fig.11(a), 115 of Fig.12(a) and 125 of Fig.13) is located at an end portion of the beam guide path 102 or 112 in such a manner that an end portion 102a or 112a of the beam guide path 102 or 112 is opened so as to allow supply of laser beam when engaging the engagement portion 101 with the tool rest 202, and the end portion 102a or 112a of the beam guide path 102 or 112 is closed so as to restrict attachment of foreign objects to the end portion or enter of foreign obj ects in the end portion when not engaging the engagement portion 101 with the tool rest 202. In case of a machine tool, oil mist generally floats in the air. The above-mentioned shutter means 105, 115, 125 are very proper for restricting attachment of oil mist to the beam guide path 102, 112 and enter of oil mist in the beam guide path 102, 112. And, power down of laser beam due to the presence of the foreign objects in the beam guide path can be avoided when using the tool for emitting laser beam.

The shutter means may be one as shown in Fig.11 (a) and (c), or as shown in Fig.13.

The shutter means 105 as shown in Fig.11 (a) and (c) is comprised of an axial portion 1051 and a shutter member 1052 attached to the axial portion 1051. When moving the axial portion 1051 in a direction as shown by arrows A and B, the shutter member 1052 selectively moves to a rotational position for opening the end portion 102a of the beam guide path and a rotational position for closing the end portion 102a of the beam guide portion through a cam mechanism (not shown).

The shutter means 125 as shown in Fig.13(a), (b) and (c) is comprised of a shutter member 1251 movable to a closed position for closing the end portion 112a of the beam guide path 112 (see Fig.13(a) and (c)) and an opened position for opening the end portion 112a (see Fig.13(b)), and a spring member 1252 for energizing the shutter member 125 to the closed position. The shutter member 1251 is moved to the opened position against the spring member 1252 when engaging the engagement portion 101 with the tool rest 202, as shown in Fig.13(b), and is moved to the closed position by an energizing force of the spring member 1252 when detaching the engagement portion 101 from the tool rest 202. The shutter member 1251 may be formed with a rubber plate having a restoring force, and may be held by a member 1253 having almost cylindrical shape. If the shutter means is structured as shown in Fig.11 or Fig.13, the members 1051, 1053 abut on the tool rest 202 so as to freely move the shutter members 1052, 1251 when attaching/detaching the tool for emitting laser beam to/from the machine tool, so that an operation for moving the member 1251 is not necessary, thereby avoiding an error operation and never failing to operate.

Preferably, cooling paths 106, 116 in which fluid flows are formed near the beam guide paths 102, 112. In this case, heat generated due to passage of laser beam can be restricted. Fluid may be liquid (such as water) or gas. If the cooling path 106, 116 is opened at a position facing the workpiece W and gas is injected on the workpiece W, it is possible to remove foreign objects on a surface of the workpiece, to avoid oxidizing the workpiece, and to cool. In case where a hardening with laser beam is performed after cutting machining, it is possible to remove water for cutting and cutting chips which remain on the surface of a workpiece, thereby improving a quality of machining with laser beam. When overheating the workpiece during a hardening, an efficiency of hardening reduces. In such a case, the workpiece is cooled with air purging so as to reduce decrease of the efficiency of hardening. If inert gas is used for gas, it is possible to shield a portion hardened.

The present invention has been explained on the basis of the example embodiments discussed. Although some variations have been mentioned, the embodiments which are described in the specification are illustrative and not limiting. The scope of the invention is designated by the accompanying claims and is not restricted by the descriptions of the specific embodiments. Accordingly, all the transformations and changes within the scope of the claims are to be construed as included in the scope of the present invention.

## Claims

1. A machine tool (200) having a workpiece holding means (203) for holding a workpiece (W), and a tool rest (202) for movably supporting at least one tool, the at least one tool including a tool for emitting a laser beam (100, 110), the machine tool (200) comprising:
a laser beam generating means (A) for generating laser beam, disposed at said tool rest (202);
said laser beam generating means (A) having a semiconducting laser beam source (2) for emitting a laser beam, and a beam guiding portion (3) for transmitting said laser beam emitted to said tool for emitting a laser beam (100, 110) ; whereby said laser beam is radiated on a workpiece (W) held by said workpiece holding means (203) through said tool for emitting a laser beam (100, 110) so as to harden said workpiece (W)
**characterized by**
said semiconducting laser beam source (2) having a plurality of openings for emission (20), for emitting said laser beam;
said beam guide portion (3) having a first beam guide portion (30) which is a bundle of a plurality of optical fibres (300), said optical fibre being located so as to receive said laser beam from each said opening for emission (20), and a second beam guide portion (31) located so as to pass through said laser beam from said first beam guide portion (30);
said second beam guide portion (31) being a hollow path (102) formed at an inside of a predetermined member (310), and an inner face of said hollow path (102) being processed so as to reflect so that said laser beam passes through said hollow path (102), being reflected by said inner face; and
said second beam guide portion (31) having a tapered beam path portion having a gradually reduced cross sectional areas
whereby the power density of said laser beam from said semiconducting laser beam source (2) is enhanced while passing through said tapered beam path portion.

2. The machine tool (200) according to claim 1, wherein said tool rest (202) is rotationally moved around a rotationally moving axis (202a), and said laser beam generating means (A) is located at a surface of said tool rest (202) almost perpendicular to said rotationally moving axis (202a).

3. The machine tool (200) according to claim 1, wherein said tool rest (202) has at least one tool installation portion (2026) for supporting a tool for cutting machining (201) and supporting said tool for emitting laser beam (100, 110) in place of said tool for cutting machining (201), and said beam guide portion (3) is located, extending from a portion near said semiconducting laser beam source (2) to a portion near said tool installation portion (2026), having a tool side end portion near said tool installation portion (2026), and said laser beam supplied from said semiconducting laser beam source (2) radiates said workpiece (W) when said tool for emitting laser beam (100, 110) connects with said tool side end portion (31a) of said beam guide portion (3), while said tool being supported by said tool installation portion (2026).

4. The machine tool (200) according to claim 3, wherein said workpiece holding means (203) can rotate held said workpiece (W), and an automatic tool changer is located at a position being capable of facing said tool installation portion (2026) so as to attach and detach said tool for cutting machining (201) and said tool for emitting laser beam (100, 110) to and from said tool installation portion (2026), and cutting machining and a hardening can be executed on rotating said workpiece (W) by changing said tool with said automatic tool changer.

5. The machine tool (200) according to claims 3 or 4, wherein a shutter means (311) for opening and closing said tool side end portion (31a) is provided, and said shutter means (311) opens said tool side end portion (31a) when contacting said tool for emitting laser beam (100, 110) with said tool side end portion (31a) and closes said tool side end portion (31a) when detaching said tool for emitting laser beam (100, 110) from said tool side end portion (31a) in order to restrict attachment of foreign objects to said tool side end portion (31a).

6. The machine tool (200) according to claim 5, wherein said shutter means (311) is a member movable to a closed position for closing said tool side end portion (31a) and an opened position for opening said tool side end portion (31a).

## Patentansprüche

1. Werkzeugmaschine (200), ein Werkstück-Haltemittel (203) zum Halten eines Werkstücks (W) und einen Werkzeugsupport (202) zum beweglichen Tragen mindestens eines Werkzeuges aufweisend, wobei das mindestens eine Werkzeug ein Werkzeug (100, 110) zur Emission eines Laserstrahls aufweist, wobei die Werkzeugmaschine (200) weiterhin aufweist:
ein Mittel (A) zur Erzeugung von Laserstrahlen, welches Laserstrahlen erzeugt und welches am besagten Werkzeugsupport (202) angeordnet ist;
wobei das besagte Mittel (A) zur Erzeugung von Laserstrahlen eine Halbleiterlaserstrahlquelle (2), welche einen Laserstrahl emittiert, und einen Teil (3) zur Strahlführung, welcher den besagten emittierten Laserstrahl zum besagten Werkzeug (100, 110) zur Emission eines Laserstrahls überträgt, aufweist, wobei der besagte Laserstrahl durch das besagte Werkzeug (100, 110) zur Emission eines Laserstrahls hindurch auf ein Werkstück (W), welches vom besagten Werkstück-Haltemittel (203) festgehalten wird, gestrahlt wird, so dass das besagte Werkstück (W) gehärtet wird;
**dadurch gekennzeichnet, dass**
die besagte Halbleiterlaserstrahlquelle (2) eine Vielzahl von Öffnungen (20) zur Emission, welche den besagten Laserstrahl emittieren, aufweist;
und dass der besagte Teil (3) zur Strahlführung einen ersten Teil (30) zur Strahlführung, welcher ein aus einer Vielzahl von Lichtleitern (300) bestehendes Bündel ist, aufweist, wobei der besagte Lichtleiter derart angeordnet ist, dass er den besagten Laserstrahl aus jeder besagten Öffnung (20) zur Emission aufnimmt, und wobei der besagte Teil (3) zur Strahlführung einen zweiten Teil (31) zur Strahlführung, welcher derart angeordnet ist, dass er den besagten Laserstrahl vom besagten ersten Teil (30) zur Strahlführung durchleitet, aufweist;
und dass der besagte zweite Teil (31) zur Strahlführung ein hohler Gang (102), welcher an einer Innenseite eines vorbestimmten Gliedes (310) ausgebildet ist, ist, wobei eine Innenseite des besagten hohlen Ganges (102) derart bearbeitet ist, dass sie reflektiert, so dass der besagte Laserstrahl den besagten hohlen Gang (102) passiert, wobei er von der besagten Innenseite reflektiert wird;
und dass der besagte zweite Teil (31) zur Strahlführung einen sich verjüngenden Teil des Strahlengangs, welcher eine allmählich abnehmende Querschnittsfläche aufweist, aufweist;
wobei die Leistungsdichte des besagten aus der Halbleiterlaserstrahlquelle (2) emittierten Laserstrahls erhöht wird, während der besagte Laserstrahl den besagten sich verjüngenden Teil des Strahlengangs passiert.

2. Werkzeugmaschine (200) nach Anspruch 1, wobei der besagte Werkzeugsupport (202) rotatorisch um eine sich rotatorisch bewegende Achse (202a) bewegt wird, und wobei das besagte Mittel (A) zur Erzeugung von Laserstrahlen auf einer Oberfläche des besagten Werkzeugsupports (202), welche sich in einer beinahe senkrechten Position zur besagten sich rotatorisch bewegenden Achse (202a) befindet, angeordnet ist.

3. Werkzeugmaschine (200) nach Anspruch 1, wobei der besagte Werkzeugsupport (202) mindestens einen Teil (2026) zur Montage eines Werkzeuges, welcher ein Werkzeug (201) zur spanenden Bearbeitung trägt und welcher das besagte Werkzeug (100, 110) zur Emission eines Laserstrahls anstelle des besagten Werkzeuges (201) zur spanenden Bearbeitung trägt, aufweist, und wobei der besagte Teil (3) zur Strahlführung derart angeordnet ist, dass er sich von einem nahe der besagten Halbleiterlaserstrahlquelle (2) befindlichen Teil bis zu einem nahe des besagten Teils (2026) zur Montage eines Werkzeuges befindlichen Teil erstreckt und einen werkzeugseitigen Endteil, welcher sich nahe dem besagten Teil (2026) zur Montage eines Werkzeuges befindet, aufweist, und wobei der besagte Laserstrahl, welcher von der besagten Halbleiterlaserstrahlquelle (2) bereitgestellt wird, das besagte Werkstück (W) anstrahlt, wenn das besagte Werkzeug (100/110) zur Emission eines Laserstrahls mit dem besagten werkzeugseitigen Endteil (31a) des besagten Teils (3) zur Strahlführung verbunden ist, während das besagte Werkzeug vom besagten Teil (2026) zur Montage eines Werkzeuges getragen wird.

4. Werkzeugmaschine (200) nach Anspruch 3, wobei das besagte Werkstück-Haltemittel (203) das festgehaltene besagte Werkstück (W) drehen kann, und wobei ein automatischer Werkzeugwechsler in einer Position, in welcher er dem besagten Teil (2026) zur Montage eines Werkzeuges zugewandt sein kann, angeordnet ist, so dass er das besagte Werkzeug (201) zur spanenden Bearbeitung und das besagte Werkzeug (100, 110) zur Emission eines Laserstrahls am Teil (2026) zur Montage eines Werkzeuges befestigen und vom Teil (2026) zur Montage eines Werkzeuges lösen kann, und wobei die spanende Bearbeitung und ein Härten auf dem rotierenden besagten Werkstück (W) durchgeführt werden können, indem das besagte Werkzeug mit dem besagten automatischen Werkzeugwechsler gewechselt wird.

5. Werkzeugmaschine (200) nach Anspruch 3 oder 4, wobei ein Klappmittel (311) zum Öffnen und Schließen des besagten werkzeugseitigen Endteils (31a) bereitgestellt wird, und wobei das besagte Klappmittel (311) den besagten werkzeugseitigen Endteil (31 a) öffnet, wenn es das besagte Werkzeug (100, 110) zur Emission eines Laserstrahls mit dem besagten werkzeugseitigen Endteil (31a) in Berührung bringt, und den besagten werkzeugseitigen Endteil (31a) verschließt, wenn es das besagte Werkzeug (100, 110) zur Emission eines Laserstrahls vom besagten werkzeugseitigen Endteil (31a) löst, um die Anlagerung von Fremdkörpern an dem besagten werkzeugseitigen Endteil (31a) zu beschränken.

6. Werkzeugmaschine (200) nach Anspruch 5, wobei das besagte Klappmittel (311) ein Glied, welches sich in eine geschlossene Position bewegen lässt, um den besagten werkzeugseitigen Endteil (31a) zu verschließen, und welches sich in eine offene Position bewegen lässt, um den besagten werkzeugseitigen Endteil (31a) zu öffnen, ist.

## Revendications

1. Machine outil (200) comportant un moyen (203) de maintien de pièce à usiner destiné à maintenir une pièce (W) à usiner, et un porte-outil (202) destiné à soutenir de manière amovible au moins un outil, l'au moins un outil comprenant un outil (100, 110) destiné à émettre un faisceau laser, la machine outil (200) comportant :
un générateur (A) de faisceau laser destiné à générer un faisceau laser et disposé sur ledit porte-outil (202) ;
ledit générateur (A) de faisceau laser comprenant une source (2) de faisceau laser semi-conducteur destinée à émettre un faisceau laser, et une partie (3) de guidage de faisceau destinée à transmettre ledit faisceau laser émis audit outil (100, 110) destiné à émettre un faisceau laser, ledit faisceau laser étant projeté sur une pièce (W) à usiner maintenue par ledit moyen (203) de maintien de pièce à usiner, à travers ledit outil (100, 110) destiné à émettre un faisceau laser afin de durcir ladite pièce (W) à usiner,
**caractérisée en ce que**
ladite source (2) de faisceau laser semi-conducteur comprend une pluralité d'ouvertures (20) d'émission destinées à émettre ledit faisceau laser ;
et **en ce que** ladite partie (3) de guidage de faisceau comprend une première partie (30) de guidage de faisceau, laquelle est un faisceau composé d'une pluralité de fibres optiques (300), ladite fibre optique étant disposée de manière à recevoir ledit faisceau laser émis par chacune desdites ouvertures (20) d'émission, et ladite partie (3) de guidage de faisceau comprenant une seconde partie (31) de guidage de faisceau disposée de manière à faire passer ledit faisceau laser de ladite première partie (30) de guidage de faisceau ;
et **en ce que** ladite seconde partie (31) de guidage de faisceau est un chemin (102) creux formé au niveau d'une face interne d'un élément (310) prédéterminé, une face interne dudit chemin (102) creux étant traitée de manière à réfléchir, de sorte que ledit faisceau laser traverse ledit chemin (102) creux en étant réfléchi par ladite face interne ;
et **en ce que** ladite seconde partie (31) de guidage de faisceau comprend une partie conique du chemin du faisceau ayant une section transversale progressivement décroissante ;
la densité de puissance dudit faisceau laser émis par ladite source (2) de faisceau laser semi-conducteur augmentant pendant le passage dudit faisceau laser à travers ladite partie conique du chemin du faisceau.

2. Machine outil (200) selon la revendication 1, dans laquelle ledit porte-outil (200) est déplacé de façon rotative autour d'un axe (202a) se déplaçant de façon rotative, ledit générateur (A) de faisceau laser étant disposé sur une surface dudit porte-outil (202), laquelle est presque perpendiculaire audit axe (202a) se déplaçant de façon rotative.

3. Machine outil (200) selon la revendication 1, dans laquelle ledit porte-outil (202) comprend au moins une partie (2026) de montage d'outil destinée à soutenir un outil (201) pour l'usinage par enlèvement de copeaux, et destinée à soutenir ledit outil (100, 110) destiné à émettre un faisceau laser à la place dudit outil (201) pour l'usinage par enlèvement de copeaux, ladite partie (3) de guidage de faisceau étant disposée de manière à s'étendre à partir d'une partie située à proximité de ladite source (2) de faisceau laser semi-conducteur vers une partie située à proximité de ladite partie (2026) de montage d'outil, et ladite partie (3) de guidage de faisceau comprenant une partie d'extrémité côté outil située à proximité de ladite partie (2026) de montage d'outil, et ledit faisceau laser fourni par la source (2) de faisceau laser semi-conducteur étant projeté sur ladite pièce (W) à usiner si ledit outil (100, 110) destiné à émettre un faisceau laser est relié à ladite partie (31a) d'extrémité côté outil de ladite partie (3) de guidage de faisceau pendant que ledit outil est soutenu par ladite partie (2026) de montage d'outil.

4. Machine outil (200) selon la revendication 3, dans laquelle ledit moyen (203) de maintien de pièce à usiner est apte à tourner ladite pièce (W) à usiner maintenue, un changeur d'outils automatique étant disposé dans une position dans laquelle il est capable de se trouver face à ladite partie (2026) de montage d'outil afin de fixer ledit outil (201) pour l'usinage par enlèvement de copeaux et ledit outil (100, 110) destiné à émettre un faisceau laser à la partie (2026) de montage d'outil, et afin de les en détacher, et l'usinage par enlèvement de copeaux et un durcissement pouvant être effectués sur ladite pièce (W) à usiner tournante en échangeant ledit outil à l'aide dudit changeur d'outils automatique.

5. Machine outil (200) selon la revendication 3 ou 4, dans laquelle un obturateur (311) destiné à ouvrir et à fermer ladite partie (31a) d'extrémité côté outil est fourni, ledit obturateur (311) ouvrant ladite partie (31a) d'extrémité côté outil lorsqu'il met en contact ledit outil (100, 110) destiné à émettre un faisceau laser et ladite partie (31a) d'extrémité côté outil, et fermant ladite partie (31a) d'extrémité côté outil lorsqu'il détache ledit outil (100, 110) destiné à émettre un faisceau laser de ladite partie (31a) d'extrémité côté outil afin de limiter la fixation de corps étrangers à ladite partie (31a) d'extrémité côté outil.

6. Machine outil (200) selon la revendication 5, dans laquelle ledit obturateur (311) est un élément qui peut être déplacé vers une position fermée afin de fermer ladite partie (31a) d'extrémité côté outil, et qui peut être déplacé vers une position ouverte afin d'ouvrir ladite partie (31a) d'extrémité côté outil.
